# EUROPEAN PATENT SPECIFICATION

(11) **EP 2 950 275 B1**
(45) Date of publication and mention of the grant of the patent: **03.07.2019**
(21) Application number: 15169467.6
(22) Date of filing: 27.05.2015
(51) Int. Cl.: G06T 15/06

(54) **APPARATUS AND METHOD OF TRAVERSING ACCELERATION STRUCTURE IN RAY TRACING SYSTEM**
VORRICHTUNG UND VERFAHREN ZUM DURCHLAUFEN EINER BESCHLEUNIGUNGSSTRUKTUR IN EINEM STRAHLVERFOLGUNGSSYSTEM
APPAREIL ET PROCEDE DE TRAVERSEE D'UNE STRUCTURE D'ACCELERATION DANS UN SYSTEME DE TRAÇAGE DE RAYON

(30) Priority: 27.05.2014 KR 20140063725
(43) Date of publication of application: 02.12.2015
(73) Proprietor: Samsung Electronics Co., Ltd., Gyeonggi-do 443-742 (KR)
(72) Inventor: Lee, Jaedon, 443-803 Gyeonggi-do (KR); Shin, Youngsam, 443-803 Gyeonggi-do (KR); Lee, Wonjong, 443-803 Gyeonggi-do (KR); Hwang, Seokjoong, 443-803 Gyeonggi-do (KR)
(74) Representative: Elkington & Fife LLP

(56) References cited:
- JAEDON LEE ET AL: "Two-AABB traversal for mobile real-time ray tracing", 20141124; 20141203 - 20141206, 24 November 2014 (2014-11-24), pages 1-5, XP058061631, DOI: 10.1145/2669062.2669088 ISBN: 978-1-4503-1891-4
- M. HAPALA ET AL: "Review: Kd-tree Traversal Algorithms for Ray Tracing", COMPUTER GRAPHICS FORUM, vol. 30, no. 1, 24 January 2011 (2011-01-24), pages 199-213, XP055221443, ISSN: 0167-7055, DOI: 10.1111/j.1467-8659.2010.01844.x
- ARTUR SANTOS ET AL: "Understanding the Efficiency of kD-tree Ray-Traversal Techniques over a GPGPU Architecture", INTERNATIONAL JOURNAL OF PARALLEL PROGRAMMING, KLUWER ACADEMIC PUBLISHERS-PLENUM PUBLISHERS, NE, vol. 40, no. 3, 29 September 2011 (2011-09-29), pages 331-352, XP035036211, ISSN: 1573-7640, DOI: 10.1007/S10766-011-0186-1
- WON-JONG LEE ET AL: "SGRT: A Mobile GPU Architecture for Real-Time Ray Tracing", HPG 2013, vol. 120, 19 July 2013 (2013-07-19), page 109, XP055221370,
- MANFRED ERNST ET AL: "Embree: Photo-Realistic Ray Tracing Kernels Open source ray tracing kernels for fast photo-realistic rendering on Intel CPUs Who uses photo-realistic rendering?", WHITE PAPER, 1 June 2011 (2011-06-01), XP055221603,

## Description

### FIELD OF THE INVENTION

The present disclosure relates to apparatuses and methods of traversing an acceleration structure in a ray tracing system.

### BACKGROUND OF THE INVENTION

In general, three-dimensional (3D) rendering refers to image processing for synthesizing 3D object data into an image that is seen from a given viewpoint of a camera.

Examples of rendering include rasterization that involves generating an image by projecting a 3D object onto an image plane and ray tracing that involves generating an image by tracing a path of light that is incident along a ray through each pixel in an image plane from a viewpoint of a camera.

Among them, ray tracing has an advantage that it may generate a high-quality image because physical properties (e.g., reflection, refraction, and transmission) of light are reflected on a result of rendering but has a disadvantage that it is difficult to perform rendering at a high speed because of a relatively large amount of computations.

Processes requiring lots of computations in ray tracing include a process of generating and traversing an acceleration structure (AS) in which scene objects to be rendered are spatially divided and a process of performing an intersection test (IST) between a ray and a primitive.

Hapala and Havran, "Review: Kd-tree Traversal Algorithms for Ray Tracing", Computer Graphics forum Volume 30 (2011), number 1, pages 199 to 213, teaches a number of kd-tree traversal algorithms and discusses their efficiency and suitability.

Santos et al "Understanding the Efficiency of kD-tree Ray-Traversal Techniques over a GPGPU Architecture", International Journal of Parallel Programming (2012), volume 40 pages 331 to 352, teaches algorithms for traversing a kD tree.

### SUMMARY OF THE INVENTION

The invention is defined by the claims.

Provided are an apparatus and a method of traversing an acceleration structure (AS) in a ray tracing system that may efficiently perform an intersection test between each child node and a ray during an AS traversal process.

Additional aspects will be set forth in part in the description which follows and, in part, will be apparent from the description, or may be learned by practice of the presented exemplary embodiments.

According to an aspect of an exemplary embodiment, there is provided a method of traversing an acceleration structure (AS) in a ray tracing system according to claim 1.

The method may simultaneously determine whether the plurality of child nodes intersect the ray by using one traversal process based on the obtained information. Thus, the time taken to perform traversal may be reduced.

The determining whether each of the plurality of child nodes intersects the ray may include simultaneously determining whether the plurality of child nodes intersect the ray.

The determining whether each of the plurality of child nodes intersects the ray may include, based on information about a first child node and a second child node, simultaneously determining whether the first child node and the second child node intersect the ray.

The determining of the next target node may include, if there exists one child node that intersects the ray, determining the one child node as the next target node, and, if there exist two or more child nodes that intersect the ray, determining a child node having the shortest intersection distance to the ray among the two or more child nodes as the next target node.

The determining of the next target node may include: if there exists no child node that intersects the ray, extracting any one node from among nodes that are not subordinate to the target node from the AS; and determining the extracted node as the next target node.

The performing of the operation corresponding to the type of the determined next target node may further include, when it is determined whether the at least one primitive intersects the ray, traversing another child node that intersects the ray.

The method may further include, if the next target node is a leaf node, determining whether a preset bounding box of at least one primitive that is included in the leaf node intersects the ray.

If the target node that is included in a root node is a leaf node, the method may further include: dividing at least one primitive that is included in the target node; and generating a child node of the target node based on the divided at least one primitive.

According to an aspect of another exemplary embodiment, there is provided an apparatus for traversing an acceleration structure (AS) in a ray tracing system according to claim 7.

The intersection tester may simultaneously determine whether the plurality of child nodes intersect the ray.

Based on information about a first child node and a second child node, the intersection tester may simultaneously determine whether the first child node and the second child node intersect the ray.

When there exists one child node that intersects the ray, the controller may determine the one child node as the next target node, and when there exist two or more child nodes that intersect the ray, determine a child node having the shortest intersection distance to the ray among the two or more child nodes as the next target node.

When there exists no child node that intersects the ray, the controller may extract any one node from among nodes that are not subordinate to the target node from the AS and determine the extracted node as the next target node.

When it is determined whether the at least one primitive intersects the ray, the controller may traverse another child node that intersects the ray.

When the next target node is a leaf node, the intersection tester may further determine whether a preset bounding box of at least one primitive that is included in the leaf node intersects the ray.

When the target node that is included in a root node is a leaf node, the controller may divide at least one primitive that is included in the target node and generate a child node of the target node based on the divided at least one primitive.

### BRIEF DESCRIPTION OF THE DRAWINGS

These and/or other aspects will become apparent and more readily appreciated from the following description of the exemplary embodiments, taken in conjunction with the accompanying drawings in which:
FIG. 1 is a view for explaining ray tracing;
FIG. 2 is a block diagram illustrating a ray tracing system;
FIG. 3 is a block diagram illustrating an apparatus for traversing an acceleration structure (AS) in the ray tracing system, according to an exemplary embodiment;
FIG. 4 is a view for explaining a data structure in which information about child nodes of a target node is stored, according to an exemplary embodiment;
FIG. 5 is a flowchart of a method of traversing an AS in the ray tracing system, according to an exemplary embodiment;
FIG. 6 is a detailed flowchart for explaining how the apparatus performs an operation corresponding to a type of a child node that intersects a ray, according to an exemplary embodiment;
FIG. 7 is a diagram illustrates states of the ray tracing system, according to an exemplary embodiment; and
FIG. 8 is a detailed block diagram illustrating the apparatus in the ray tracing system, according to an exemplary embodiment.

### DETAILED DESCRIPTION OF THE EXEMPLARY EMBODIMENTS

As used herein, the term "and/or" includes any and all combinations of one or more of the associated listed items. Expressions such as "at least one of," when preceding a list of elements, modify the entire list of elements and do not modify the individual elements of the list.

The inventive concept will now be described more fully with reference to the accompanying drawings, in which exemplary embodiments are shown.

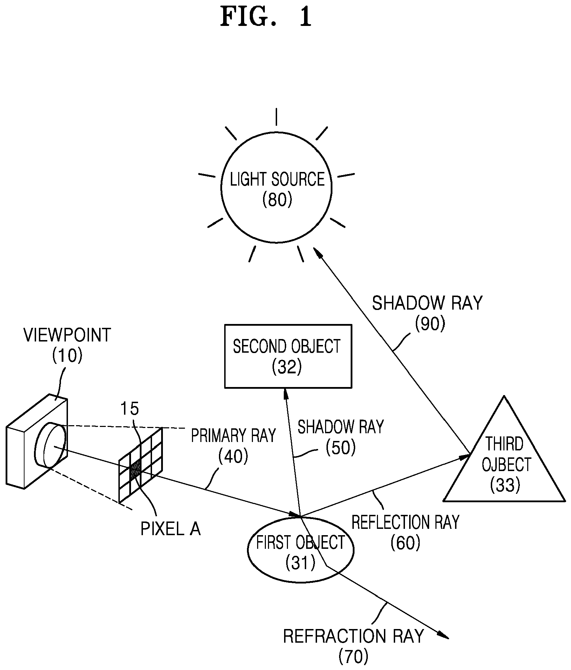

FIG. 1 is a view for explaining ray tracing.

As shown in FIG. 1, a three-dimensional (3D) model may include a light source 80, a first object 31, a second object 32, and a third object 33. Although each of the first object 31, the second object 32, and the third object 33 looks like a two-dimensional (2D) object in FIG. 1 for convenience of explanation, each of the first object 31, the second object 32, and the third object 33 is a 3D object.

In this case, it may be assumed that the first object 31 has a reflectance and a refractive index that are greater than 0 and each of the second object 32 and the third object 33 has a reflectance and a refractive index that are 0. That is, it may be assumed that the first object 31 reflects and refracts light, whereas the second object 32 and the third object 33 do not reflect and refract light.

In the 3D model of FIG. 1, a rendering apparatus (for example, a ray tracing apparatus) may determine a viewpoint 10 in order to generate a 3D image and may determine an image plane 15 according to the determined viewpoint 10.

Once the viewpoint 10 and the image plane 15 are determined, the ray tracing apparatus 100 may generate a ray for each pixel of the image plane 15 from the viewpoint 10.

For example, as shown in FIG. 1, when the image plane 15 has a resolution of 4*3, the ray tracing apparatus 100 may generate a ray for each of the 12 pixels.

Only a ray for one pixel (for example, a pixel A) will now be explained.

Referring to FIG. 1, a primary ray 40 is generated for the pixel A from the viewpoint 10. The primary ray 40 passes through a 3D space and reaches the first object 31. The first object 31 may include a set of predetermined unit regions (hereinafter, referred to as primitives), and the primitives may be polygons such as triangles or quadrangles. The following will now be explained on the assumption that the primitives are triangles.

A shadow ray 50, a reflection ray 60, and a refraction ray 70 may be generated at a hit point between the primary ray 40 and the first object 31. In this case, the shadow ray 50, the reflection ray 60, and the refraction ray 70 are referred to as secondary rays.

The shadow ray 50 is generated and applied from the hit point to the light source 80. The reflection ray 60 is generated at an angle corresponding to an angle of incidence of the primary ray 40 and is assigned a weight according to a reflectance of the first object 31. The refraction ray 70 is generated at an angle corresponding to a refractive index of the first object 31 and the angle of incidence of the primary ray 40, and is assigned a weight according to the refractive index of the first object 31.

The ray tracing apparatus 100 determines whether the hit point is exposed through the shadow ray 50 to the light source 80. For example, as shown in FIG. 1, when the shadow ray 50 meets the second object 32, a shadow may be formed at a hit point where the shadow ray 50 is generated.

Also, the ray tracing apparatus 100 determines whether the refraction ray 70 and the reflection ray 60 reach another object. For example, as shown in FIG. 1, there exists no object in a direction in which the refraction ray 70 travels, and the reflection ray 60 reaches the third object 33. Accordingly, the ray tracing apparatus 100 checks coordinates and color information of a hit point of the third object 33, and generates a shadow ray 90 from the hit point of the third object 33. In this case, the ray tracing apparatus 100 determines whether the shadow ray 90 is exposed to the light source 80.

Since the reflectance and the refractive index of the third object 33 are 0, a reflection ray and a refraction ray for the third object 33 are not generated.

As described above, the ray tracing apparatus 100 analyzes the primary ray 40 for the pixel A and all rays that are derived from the primary ray 40 and determines a color value of the pixel A according to a result of the analysis. The determination of the color value of the pixel A is affected by a color of a hit point of the primary ray 40, a color of a hit point of the reflection ray 60, and whether the shadow ray 50 reaches the light source 80.

The ray tracing apparatus 100 may construct the image plane 15 by performing the above process on all of the pixels of the image plane 15.

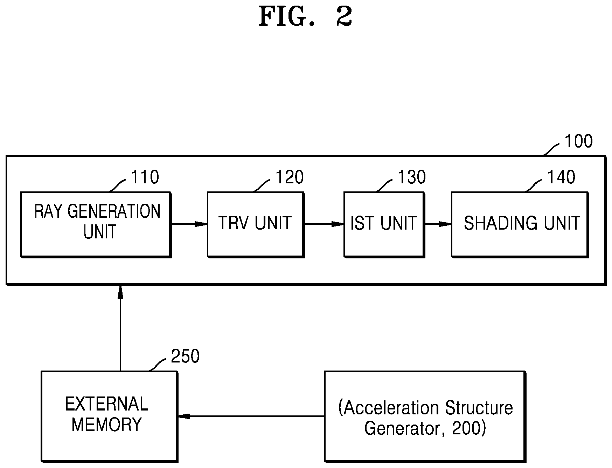

FIG. 2 is a block diagram illustrating a ray tracing system 20.

Referring to FIG. 2, the ray tracing system 20 may include the ray tracing apparatus 100, an external memory 250, and an acceleration structure (AS) generator 200.

Also, the ray tracing apparatus 100 may include a ray generation unit 110, a traversal (TRV) unit 120, an intersection test (IST) unit 130, and a shading unit 140.

The ray generation unit 110 may generate a primary ray and rays that are derived from the primary ray. The ray generation unit 110 may generate a primary ray from the viewpoint 10 and may generate a secondary ray at a hit point between the primary ray and an object, as described with reference to FIG. 1. In this case, the secondary ray may be a reflection ray, a refraction ray, or a shadow ray that is generated at the hit point between the primary ray and the object.

Also, the ray generation unit 110 may generate a tertiary ray at a hit point between the secondary ray and an object. The ray generation unit 110 may continuously generate a ray until any ray does not intersect the object or may generate a ray a predetermined number of times.

The TRV unit 120 may receive information about the ray that is generated by the ray generation unit 110. The generated ray includes the primary ray and the rays (e.g., the secondary ray, the tertiary ray, etc.) that are derived from the primary ray.

For example, for the primary ray, the TRV unit 120 may receive information about a viewpoint and a direction of the primary ray. Also, for the secondary ray, the TRV unit 120 may receive information about a start point and a direction of the secondary ray. The start point of the secondary ray refers to the hit point between the primary ray and the object. Also, the viewpoint or the start point may be expressed as coordinates and the direction may be expressed as a vector.

The TRV unit 120 may read information about an AS from the external memory 250.

In this case, the AS is generated by the AS generator 200 and the generated AS is stored in the external memory 250.

The AS generator 200 may generate the AS including position information of objects in a 3D space. The AS generator 200 divides the 3D space in a hierarchical tree shape. The AS generator 200 may generate the AS having any of various shapes. For example, the AS generator 200 may generate the AS indicating a relationship of the objects in the 3D space by using a k-dimensional (kd) tree or a bounding volume hierarchy (BVH).

The AS may include a root node, an inner node, a leaf node, and a primitive. The term 'root node' refers to an uppermost node that does not have a parent node and only has a child node. Also, the term 'inner node' refers to a node that has both a parent node and a child node. The term 'leaf node' refers to a lowermost node that does not have a child node and only has a parent node. The leaf node may include primitives therein.

The TRV unit 120 may detect a leaf node that intersects a ray by traversing the read information about the AS.

The IST unit 130 may receive the leaf node that intersects the ray from the TRV unit 120.

The IST unit 130 may read, from the external memory 250, information (geometry data) about primitives that are included in the received leaf node.

The IST unit 130 may perform an intersection test between the ray and each of the primitives by using the information about the read information about the primitives.

For example, the IST unit 130 may determine which primitive from among the primitives that are included in the leaf node received from the TRV unit 120 intersects the ray.

Accordingly, the IST unit 130 may detect a primitive that intersects the ray, and may calculate a hit point between the detected primitive and the ray.

The calculated hit point may be output as coordinates to the shading unit 140.

The shading unit 140 may determine a color value of a pixel based on information about the hit point and characteristics of a material of the hit point. Also, the shading unit 140 may determine the color value of the pixel by taking into account a basic color of the material of the hit point and an effect of a light source.

For example, in FIG. 1, the shading unit 140 may determine a color value of the pixel A by taking into account the effects of the primary ray 40, and the refraction ray 70, the reflection ray 60, and the shadow ray 50 that are secondary rays.

The ray tracing apparatus 100 may receive data that is necessary for ray tracing from the external memory 250. The external memory 250 may store the AS or geometry data.

The AS is generated by the AS generator 200 and is stored in the external memory 250.

Also, the geometry data refers to information about primitives. The primitives may be polygons such as triangles or quadrangles, and the geometry data may include information about positions and vertices of the primitives that are included in an object. For example, when the primitives are triangles, the geometry data may include vertex coordinates, normal vectors, or texture coordinates of the triangles.

The ray tracing apparatus 100 may detect a leaf node that intersects a ray by traversing the AS. The ray tracing apparatus 100 may traverse the AS along one path, and when a traversal process ends, may traverse the AS of another path. When the AS of the other path is traversed, the ray tracing apparatus 100 may store, in a stack, information about a node that is not traversed in order to improve traversal efficiency. The stack may be a temporary storage device that is included in the ray tracing apparatus 100. However, the present exemplary embodiment is not limited thereto, and the stack may be disposed outside the ray tracing apparatus 100 and may communicate with a plurality of modules that are included in the ray tracing apparatus 100.

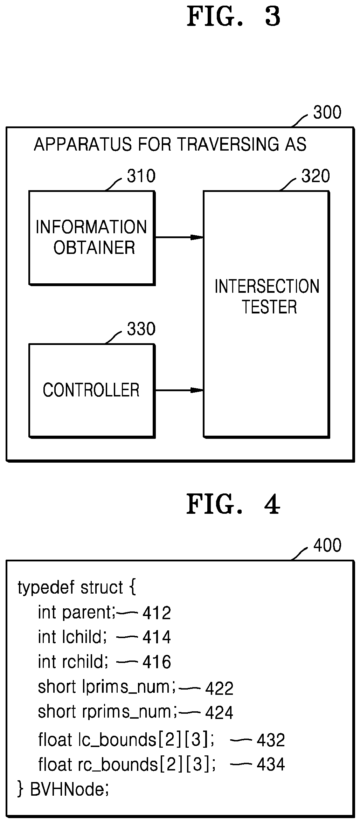

FIG. 3 is a block diagram illustrating an apparatus 300 for traversing an AS in the ray tracing system 10, according to an exemplary embodiment.

Referring to FIG. 3, the apparatus 300 may include an information obtainer 310, an intersection tester 320, and a controller 330.

Also, the information obtainer 310, the intersection tester 320, and the controller 330 of FIG. 3 that are used to traverse the AS may be included in the TRV unit 120 of FIG. 2. However, the present exemplary embodiment is not limited thereto.

The information obtainer 310 obtains information about a plurality of child nodes of a target node that is included in the AS. The target node may be an inner node or a root node. The information obtainer 310 may obtain information about the plurality of child nodes of the target node in order to determine a node that is to be traversed next (hereinafter, referred to as a next target node).

The information obtainer 310 may start to traverse the AS beginning from a root node. The root node according to an exemplary embodiment may have a plurality of child nodes. The information obtainer 310 may obtain information about the plurality of child nodes of the root node in order to determine a next target node of the root node.

According to another exemplary embodiment, when the root node is a leaf node that does not have a child node, the information obtainer 310 may control the AS generator 200 to divide at least one primitive that is included in the leaf node and generate a child node. When the AS generator 200 generates a child node by dividing at least one primitive that is included in the leaf node, the information obtainer 310 may obtain information about the generated child node.

Information about child nodes of the target node may include information that is necessary to determine a next target node. The information about the child nodes of the target node according to an exemplary embodiment may include memory addresses in which the child nodes are stored, indices indicating the child nodes, type information of the child nodes, and bounding box information of the child nodes. The term 'bounding box' refers to a smallest hexahedral space that may include an object that independently moves in a 3D space.

The information about the child nodes of the target node will now be explained in detail with reference to FIG. 4.

FIG. 4 is a view for explaining a data structure 400 in which information about child nodes of a target node is stored, according to an exemplary embodiment.

Referring to FIG. 4, the information about the child nodes of the target node may be included in the data structure 400 that is preset. For example, the information about the child nodes of the target node may include identification information 414 and 416 for identifying the child nodes. When the child nodes are inner nodes, the identification information may be index information indicating the child nodes. When the child nodes are leaf nodes, the identification information 414 and 416 is used to indicate start indices of primitives that are included in the child nodes.

When the child nodes are leaf nodes, in order to indicate the number of primitives that are included in the child nodes, the information about the child nodes of the target node may include primitive number information 422 and 424 indicating the number of primitives of the child nodes. When the child nodes are inner nodes, the primitive number information 422 and 424 may be set to 0.

The information about the child nodes of the target node may include bounding box information 432 and 434 of the child nodes. Also, the information about the child nodes of the target node may further include information 412 about a parent node of the target node. However, the present exemplary embodiment is not limited thereto, and the information about the child nodes of the target node may include information other than the above information.

The information obtainer 310 according to an exemplary embodiment may simultaneously obtain information about child nodes that are included in the data structure 400 that is preset. In this case, the information obtainer 310 does not need to repeatedly traverse the target node in order to obtain the information about the child nodes of the target node. The information obtainer 310 may traverse the child nodes by using memory addresses 412 and 414 in which the child nodes are stored, and may identify the child nodes by using primitive number information 422 and 424 that indicate the child nodes. When the target node is an inner node, the primitive number information 422 and 424 that indicate the child nodes may each indicate at least one primitive that is included in the target node.

Also, the information obtainer 310 may obtain type information of the child nodes and bounding box information 432 and 434 of the child nodes, and may provide information for determining a node that is to be traversed next and an operation to be performed on the node that is to be traversed next by using only one traversal process.

A case where the target node has two child nodes will be exemplarily explained for convenience of explanation. However, the present exemplary embodiment is not limited thereto.

The intersection tester 320 determines whether each of the plurality of child nodes intersects a ray based on the obtained information about the plurality of child nodes. The intersection tester 320 may simultaneously determine whether bounding boxes of the child nodes intersect the ray based on the bounding box information of the child nodes.

The intersection tester 320 according to an exemplary embodiment may simultaneously determine whether the bounding boxes of the child nodes intersect the ray. For example, based on the bounding box information of a first child node and the bounding box information of a second child node, the intersection tester 320 may simultaneously determine whether a bounding box of the first child node and a bounding box of the second child node intersect the ray.

Even when three or more child nodes are included in the target node, the intersection tester 320 may simultaneously determine whether the child nodes intersect the ray. However, this is exemplary, and according to another exemplary embodiment, some child nodes from among the plurality of child nodes may be grouped in a preset order and it may be determined whether bounding boxes of the grouped child nodes intersect the ray.

The controller 330 determines a next target node from among at least one child node that intersects the ray. The controller 330 may obtain information about the at least one child node that intersects the ray from the intersection tester 320.

When two or more child nodes intersect the ray, the controller 330 may determine a next target node based on an intersection distance. For example, when an intersection distance between the first child node and the ray is less than an intersection distance between the second child node and the ray, the controller 330 may determine the first child node as a next target node.

Also, the controller 330 may store, in a stack, child nodes that are not determined as the next target node from among the child nodes that intersect the ray. For example, the controller 330 may store, in the stack, the second child node that is not determined as the next target node from among the first child node and the second child node.

The controller 330 performs an operation corresponding to a type of the determined next target node. The controller 330 according to an exemplary embodiment may determine the type of the determined next target node. Examples of the type of the target node may include an inner node and a leaf node. When the next target node is an inner node, the controller 330 may transmit information about the type of the next target node to the information obtainer 310 and the above process may be performed again.

For example, when the next target node is an inner node A, the controller 330 may determine the inner node A as the target node and may transmit information about the inner node A to the information obtainer 310. The information obtainer 310 may determine the inner node A as the target node and may obtain information about child nodes of the inner node A. Also, the intersection tester 320 may perform an intersection test on each of the child nodes of the inner node A based on the obtained information about the child nodes of the inner node A. The controller 330 may extract at least one child node that intersects a ray from among the child nodes of the inner node A and may determine a next target node from among the extracted at least one child node.

When the next target node is a leaf node B, the controller 330 may transmit information about the leaf node B to the IST unit 130 (see FIG. 2). The IST unit 130 repeatedly performs an intersection test to determine whether each of at least one primitive that is included in the leaf node B intersects a ray. Alternatively, the controller 330 may control the external memory 250 to transmit information about the at least one primitive that is included in the leaf node B that is included in the external memory 250 to the IST unit 130.

When there exists no next target node, the controller 330 ends a series of traversal processes and transmits a result of the traversal processes to the shading unit 140. The shading unit 140 may determine a color value of a pixel corresponding to the ray based on information of a hit point between the ray and each of the primitives and characteristics of a material of the hit point. Also, the shading unit 140 may determine the color value of the pixel by taking into account a basic color of the material of the hit point, an effect of a light source, etc.

When there exists no child node that intersects the ray from among the plurality of child nodes, the controller 330 may extract another node that is stored in the stack and may determine the other node as a next target node. The other node according to an exemplary embodiment may be any one node from among nodes that are not subordinate to the target node in the AS. For example, the controller 330 may determine a node having the same parent node as that of the target node as a next target node in the AS.

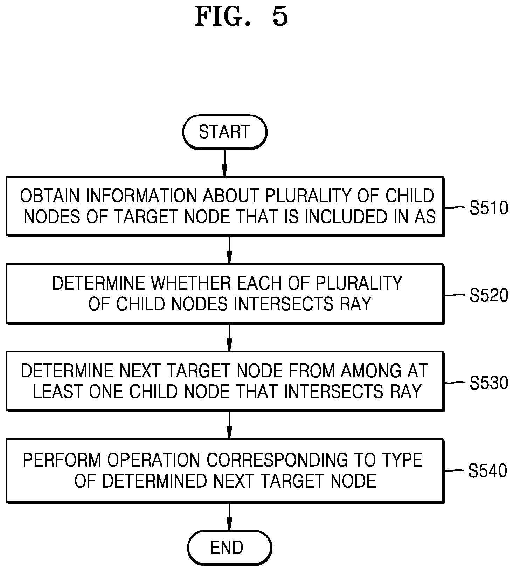

FIG. 5 is a flowchart of a method of traversing an AS in the ray tracing system 10, according to an exemplary embodiment.

In operation 510, the apparatus 300 obtains information about a plurality of child nodes of a target node that is included in the AS. The target node may be an inner node or a root node. The apparatus 300 may obtain the information about the plurality of child nodes of the target node in order to determine a node (hereinafter, referred to as a next target node) that is to be traversed next. The information about the child nodes may include memory addresses in which the child nodes are stored, indices indicating the child nodes, type information of the child nodes, and bounding box information of the child nodes.

In operation 520, the apparatus 300 determines whether each of the plurality of child nodes intersects a ray. The apparatus 300 according to an exemplary embodiment may simultaneously determine whether bounding boxes of the child nodes intersect the ray. The apparatus 300 may simultaneously determine whether the plurality of child nodes intersect the ray by using one traversal process based on the obtained information about the plurality of child nodes, thereby reducing a time taken to perform traversal.

In operation 530, the apparatus 300 determines a next target node from among at least one child node that intersects the ray. When two or more child nodes intersect the ray, the apparatus 300 may determine the next target node based on an intersection distance. For example, the apparatus 300 may determine a child node having the shortest intersection distance to the ray is among the plurality of child nodes that intersect the ray as the next target node. The apparatus 300 may store, in a stack, child nodes that are not determined as the next target node from among the plurality of child nodes that intersect the ray.

In operation 540, the apparatus 300 performs an operation corresponding to a type of the determined next target node. The apparatus 300 may determine the type of the determined next target node. Examples of the type of the target node may include an inner node and a leaf node. When the next target node is an inner node, the apparatus 300 may repeatedly perform operations 510 through 540 on the next target node.

When the next target node is a leaf node, the apparatus 300 may transmit information about the next target node to the IST unit 130 (see FIG. 2). The IST unit 130 repeatedly performs an intersection test to determine whether each of at least one primitive that is included in the next target node intersects the ray.

Also, when there exists no next target node, the apparatus 300 ends a series of traversal processes and transmits a result of the traversal processes to the shading unit 140.

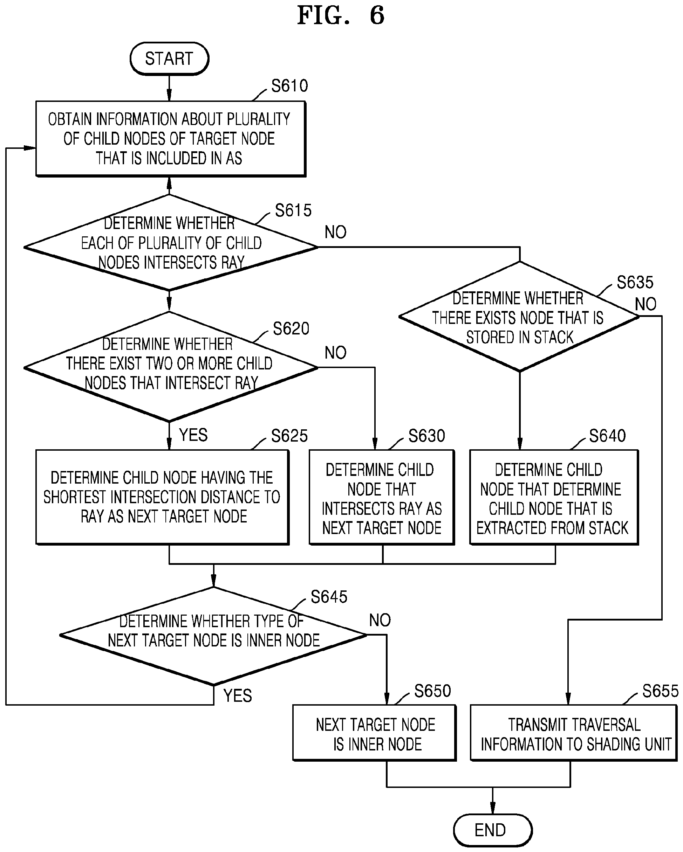

FIG. 6 is a detailed flowchart for explaining how the apparatus 300 performs an operation corresponding to a type of a child node that intersects a ray, according to an exemplary embodiment.

In operation 610, the apparatus 300 obtains information about a plurality of child nodes of a target node that is included in an AS. The target node may be an inner node or a root node. Operation 610 may correspond to operation 510 of FIG. 5.

In operation 615, the apparatus 300 determines whether each of the plurality of child nodes intersects a ray. The apparatus 300 may simultaneously determine whether the plurality of child nodes intersect the ray based on the obtained information about the plurality of child nodes.

In operation 620, the apparatus 300 determines whether two or more child nodes intersect the ray.

In operation 625, the apparatus 300 determines a child node having the shortest intersection distance to the ray among the two or more child nodes that intersect the ray as a next target node. The apparatus 300 may store, in a stack, child nodes that are not determined as the next target node from among the two or more child nodes that intersect the ray.

In operation 630, the apparatus 300 determines one child node that intersects the ray as the next target node. If it is determined in operation 620 that one child node intersects the ray, the apparatus 300 may determine the one child node as the next target node.

In operation 635, the apparatus 300 determines whether there exists a node that is stored in the stack. When there exists no child node that intersects the ray, the apparatus 300 may determine whether another node exists in the stack. The other node may be any node that is not subordinate to the target node in the AS.

In operation 640, the apparatus 300 determines a node that is extracted from the stack as the next target node. When there exists a child node that is stored in the stack, the apparatus 300 may extract the child node from the stack. The apparatus 300 may determine the extracted child node as the next target node.

In operation 645, the apparatus 300 determines whether a type of the determined next target node is an inner node. If the type of the determined next target node is an inner node, the apparatus 300 may change the next target node to a target node, may return to operation 610, and may repeatedly perform the above processes. For example, if the determined next target node is the inner node A, the apparatus 300 may set the inner node A to a target node and may obtain information about child nodes of the inner node A. Subsequent processes are the same as operations 615 through 640.

In operation 650, the apparatus 300 transmits information about the ray to the IST unit 130. When the type of the determined next target node is a leaf node(NO), the apparatus 300 may transmit the information about the ray to the IST unit 130. The IST unit 130 may determine whether each of primitives that are included in the next target node intersects the ray.

In operation 655, the apparatus 300 transmits the information about the ray to the shading unit 140. When there exists no node to be traversed in the AS, the apparatus 300 may transmit information obtained after traversal to the shading unit 140. The information obtained after traversal may include intersection information between the ray and each of objects that are included in a 3D space or each of primitives that are included in each of the objects. The shading unit 140 may determine a color value of a pixel corresponding to the ray based on information about a hit point between the ray and each of the primitives and characteristics of a material of the hit point. Also, the shading unit 140 may determine the color value of the pixel by taking into account a basic color of the material of the hit point, an effect of a light source, etc.

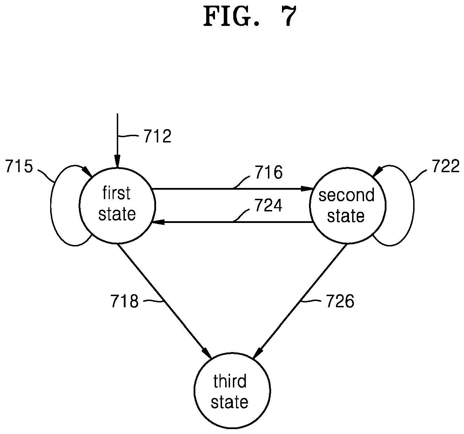

FIG. 7 is a diagram illustrating states of the ray tracing system 10, according to an exemplary embodiment.

There is a first state, a second state, and a third state of the ray tracing system 10 according to an exemplary embodiment. The first state is a state in which nodes that are included in an AS are traversed. The second state is a state in which an intersection test is performed on each of primitives that are included in leaf nodes from among the nodes that are included in the AS. The third state is a state in which when all of the nodes that are included in the AS are traversed, a color value of a pixel is determined based on intersection information obtained during a traversal process and the traversal process of the nodes ends.

Since the ray tracing system 10 according to an exemplary embodiment simultaneously performs an intersection test on a plurality of child nodes of a target node, states of the ray tracing system 10 may be simplified as three states as described above.

A state change in the ray tracing system 10 according to an exemplary embodiment will now be explained with reference to FIG. 7.

In operation 712, the apparatus 300 may obtain information about child nodes of a root node.

In operation 714, when it is determined based on the obtained information that a next target node is an inner node, the apparatus 300 may obtain information about child nodes of the next target node. When the next target node is an inner node, operations 712 through 714 may be repeatedly performed.

In operation 716, when the next target node is a leaf node, the apparatus 300 transmits information about the leaf node to the IST unit 130.

In operation 718, when there exists no next target node, the apparatus 300 ends a traversal process and transmits a result of the traversal process to the shading unit 140.

Operations 712 through 718 may be performed in the first state of the ray tracing system 10.

In operation 722, the IST unit 130 repeatedly performs an intersection test on at least one primitive that is included in the leaf node. The IST unit 130 may determine whether there exists a hit point between the ray and the at least one primitive, may compare an intersection distance with that of a previous hit point, and may select a hit point having a shorter intersection distance than the determined hit point.

In operation 724, the IST unit 130 may end the intersection test performed on the leaf node and may return to the first state in order to traverse a next target node.

In operation 726, the IST unit 130 ends the intersection test performed on the leaf node, and when there exists no child node that is stored in a stack, transmits a result of the intersection test to the shading unit 140.

Operations 724 through 726 may be performed in the second state of the ray tracing system 10.

In the third state of the ray tracing system 10, a color value corresponding to the ray is determined based on intersection information that is obtained by the shading unit 140.

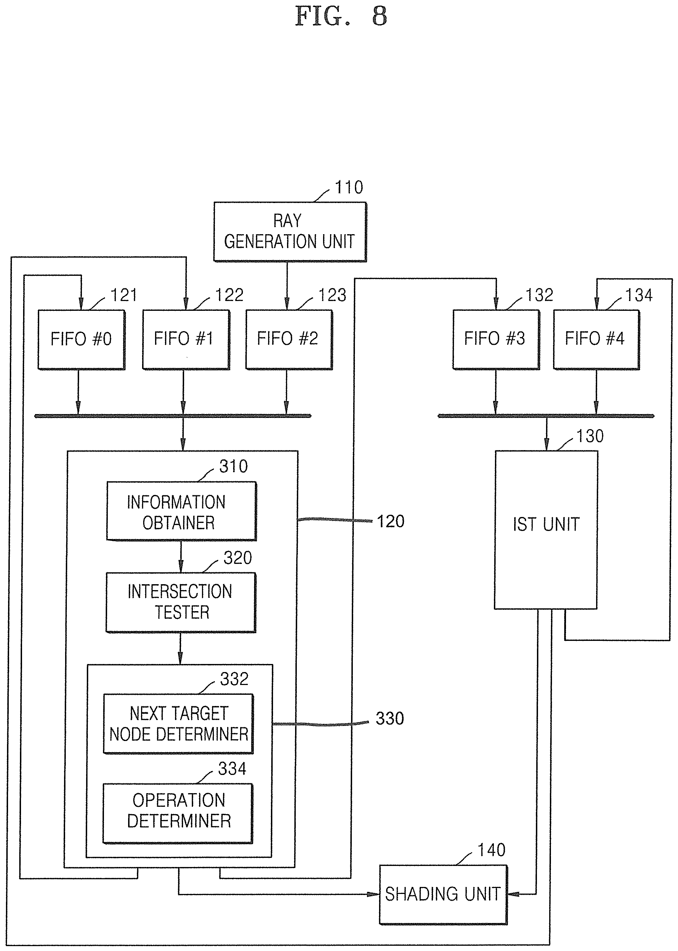

FIG. 8 is a detailed block diagram illustrating the apparatus 300 in the ray tracing system 10, according to an exemplary embodiment.

The ray tracing system 10 may include a plurality of FIFO units, for example, zeroth to fourth FIFO units 121, 122, 123, 132, and 134, the ray generation unit 110, the TRV unit 120, the IST unit 130, and the shading unit 140. A case where the apparatus 300 according to an exemplary embodiment is included in the TRV unit 120 will now be explained with reference to FIG. 8.

The ray generation unit 110 may generate a primary ray and rays that are derived from the primary ray. The ray generation unit 110 may generate the primary ray and a secondary ray at a hit point between the primary ray and an object. In this case, the secondary ray may be a reflection, refraction, or shadow ray that is generated at the hit point between the primary ray and the object.

Also, the ray generation unit 110 may continuously generate a ray until any ray does not intersect the object, or may generate a ray a predetermined number of times.

The TRV unit 120 may receive information about the ray that is generated by the ray generation unit 110. The TRV unit 120 may be connected to three FIFO units for receiving an input. The TRV unit 120 may receive a new ray from the ray generation unit 110 through the first FIFO unit 121. Also, the TRV unit 120 may obtain information for traversing a next node through the second FIFO unit 122. The TRV unit 120 may obtain the information for traversing the next node after intersection of the IST unit 130 ends.

The ray that is generated by the ray generation unit 110 includes a primary ray and rays (e.g., a secondary ray, a tertiary ray, etc.) that are derived from the primary ray. How the apparatus 300 according to an exemplary embodiment that is included in the TRV unit 120 traverses a plurality of nodes will now be explained.

The apparatus 300 that is included in the TRV unit 120 may include the information obtainer 310, the intersection tester 320, and the controller 330, and the controller 330 may include a next target node determiner 332 and an operation determiner 334.

The information obtainer 310 obtains information about a plurality of child nodes of a target node that is included in an AS. The target node may be an inner node or a root node. The intersection tester 320 determines whether each of the plurality of child nodes intersects a ray. The intersection tester 320 may simultaneously determine whether the plurality of child nodes intersect the ray by using one traversal process based on the obtained information about the plurality of child nodes, thereby reducing a time taken to perform traversal.

The next target node determiner 332 determines a next target node from among at least one child node that intersects the ray. When two or more child nodes intersect the ray, the next target node determiner 332 may determine the next target node based on an intersection distance.

The operation determiner 334 performs an operation corresponding to a type of the determined next target node. The operation determiner 334 may determine the type of the determined next target node. Examples of the type of the target node may include an inner node and a leaf node.

When the operation determiner 334 determines that the next target node is an inner node, the information obtainer 310 may obtain information about the next target node through the zeroth FIFO unit 121.

When the next target node is a leaf node, the operation determiner 334 may transmit information about the next target node to the IST unit 130 (see FIG. 2). The IST unit 130 repeatedly performs an intersection test to determine whether each of at least one primitive that is included in the next target node intersects the ray. The IST unit 130 may detect primitives that intersect the ray and may calculate a hit point between each of the detected primitives and the ray.

The calculated hit point may be output as coordinates to the shading unit 140.

As described above, according to the one or more of the above exemplary embodiments, processing speed is increased and thus a time taken to perform an AS traversal process is reduced, thereby efficiently performing an intersection test between a ray and each child node.

A method of traversing an AS in a ray tracing system according to the one or more exemplary embodiments may be embodied as computer-readable codes in a computer-readable recording medium. The computer-readable recording medium includes any storage device that may store data which may be read by a computer system. Examples of the computer-readable recording medium include read-only memories (ROMs), random-access memories (RAMs), CD-ROMs, magnetic tapes, floppy disks, and optical data storage devices. The computer-readable recording medium may be distributed over network-coupled computer systems so that the computer-readable codes are stored and executed in a distributed fashion.

While one or more exemplary embodiments have been described with reference to the figures, it will be understood by those of ordinary skill in the art that various changes in form and details may be made therein without departing from the scope as defined by the following claims.

## Claims

1. A method of traversing an acceleration structure (AS) for ray tracing by an apparatus;
the method comprising:
in a first state:
obtaining information about a plurality of child nodes of a target node that is included in the AS (S510), wherein the obtained information is preset in a data structure and the data structure comprises memory addresses at which the child nodes are stored, indices indicating the child nodes, type information of the child nodes, and bounding box information of the child nodes;
determining, simultaneously, whether each of the plurality of child nodes intersects a ray based on the obtained information (S520) in one traversal process;
determining a next target node from among at least one child node that intersects the ray (S530);
performing an operation corresponding to a type of the determined next target node (S540);
wherein the performing of the operation corresponding to the type of the determined next target node comprises:
if the next target node is an inner node, moving to at least one child node of the next target node,
if the next target node is a leaf node, transmitting (716) information about the leaf node to a second state, and
if there exists no target node, transmitting (718) the result of the traversal process to a third state and ending the traversal process;
wherein the method comprises, in the second state, repeatedly determining whether at least one primitive that is included in the leaf node intersects the ray; and
the method comprises, in the third state, determining the color value of a pixel based on the intersection information obtained.

2. The method of claim 1, wherein the determining of the next target node comprises:
if there exists one child node that intersects the ray, determining the one child node as the next target node (S625); and
if there exist two or more child nodes that intersect the ray, determining a child node having the shortest intersection distance to the ray among the two or more child nodes as the next target node (S630).

3. The method of claim 1, wherein the determining of the next target node comprises:
if there exists no child node that intersects the ray, extracting any one node from among nodes that are not subordinate to the target node from the AS; and
determining the extracted node as the next target node (S640).

4. The method of claim 1, wherein the performing of the operation corresponding to the type of the determined next target node further comprises, if it is determined whether the at least one primitive intersects the ray, traversing another child node that intersects the ray.

5. The method of claim 1, further comprising, if the next target node is a leaf node, determining whether a preset bounding box of at least one primitive that is included in the leaf node intersects the ray.

6. The method of claim 1, if the target node that is included in a root node is a leaf node, further comprising:
dividing at least one primitive that is included in the target node; and
generating a child node of the target node based on the divided at least one primitive.

7. An apparatus adapted to traverse an acceleration structure (AS) for ray tracing, the apparatus comprising:
an information obtainer (310) that is adapted in a first state to obtain information about a plurality of child nodes of a target node that is included in the AS, wherein the obtained information is preset in a data structure and the data structure comprises memory addresses at which the child nodes are stored, indices indicating the child nodes, type information of the child nodes, and bounding box information of the child nodes;
an intersection tester (320) that is adapted in the first state to determine, simultaneously, whether each of the plurality of child nodes intersects a ray based on the obtained information in one traversal process; and
a controller (330) that is adapted in the first state to determine a next target node from among at least one child node that intersects the ray and to perform an operation corresponding to a type of the determined next target node;
wherein the controller (330) is adapted in the first state to perform the operation corresponding to the type of the determined next target node by:
if the next target node is an inner node, moving to at least one child node of the next target node,
if the next target node is a leaf node, transmitting (716) information about the leaf node to a second state, and
if there exists no target node, transmitting (718) the result of the traversal process to a third state and ending the traversal process;
wherein the controller is adapted, in the second state, to repeatedly determine whether at least one primitive that is included in the leaf node intersects the ray; and
the controller is adapted, in the third state, to determine the color value of a pixel based on the intersection information obtained.

8. The apparatus of claim 7, wherein the controller (330),
when there exists one child node that intersects the ray, is adapted to determine the one child node as the next target node, and
when there exist two or more child nodes that intersect the ray, is adapted to determine a child node having the shortest intersection distance to the ray among the two or more child nodes as the next target node.

9. The apparatus of claim 7, wherein when there exists no child node that intersects the ray, the controller (330) is adapted to extract any one node from among nodes that are not subordinate to the target node from the AS and to determine the extracted node as the next target node.

10. The apparatus of claim 7, wherein when it is determined whether the at least one primitive intersects the ray, the controller is adapted to traverse another child node that intersects the ray.

11. The apparatus of claim 10, wherein when the next target node is a leaf node, the intersection tester is further adapted to determine whether a preset bounding box of at least one primitive that is included in the leaf node intersects the ray.

12. The apparatus of any one of claims 7 to 11, wherein when the target node that is included in a root node is a leaf node, the controller is adapted to divide at least one primitive that is included in the target node and to generate a child node of the target node based on the divided at least one primitive.

13. A non-transitory computer-readable recording medium having embodied thereon a program for executing the method of claim 1 when said program is run on a computer.

## Patentansprüche

1. Verfahren zum Durchlaufen einer Beschleunigungsstruktur (AS) für Strahlenverfolgung durch ein Gerät;
wobei das Verfahren Folgendes umfasst:
in einem ersten Zustand:
Erhalten von Information über eine Vielzahl von untergeordneten Knoten eines Zielknoten, der in der AS (S510) enthalten ist, wobei die erhaltene Information in einer Datenstruktur voreingestellt ist und die Datenstruktur Speicheradressen umfasst, an denen die untergeordneten Knoten gespeichert sind, wobei Indexe die untergeordneten Knoten, Typinformation der untergeordneten Knoten und Begrenzungsrahmeninformation der untergeordneten Knoten angeben;
Ermitteln, gleichzeitig, ob jeder der Vielzahl von untergeordneten Knoten einen Strahl basierend auf der erhaltenen Information (S520) in einem Durchlaufprozess kreuzt;
Bestimmen eines nächsten Zielknotens aus mindestens einem untergeordneten Knoten, der den Strahl (S530) kreuzt;
Ausführen einer Operation, die einem Typ des bestimmten nächsten Zielknotens (S540) entspricht;
wobei das Ausführen der Operation, die dem Typ des bestimmten nächsten Zielknotens entspricht, Folgendes umfasst:
wenn der nächste Zielknoten ein innerer Knoten ist, Bewegen zum mindestens einen untergeordneten Knoten des nächsten Zielknotens,
wenn der nächste Zielknoten ein Endknoten ist, Übertragen (716) von Information über den Endknoten an einen zweiten Zustand, und,
wenn kein Zielknoten vorhanden ist, Übertragen (718) des Ergebnisses des Durchlaufprozesses an einen dritten Zustand und Beenden des Durchlaufprozesses;
wobei das Verfahren im zweiten Zustand das mehrfache Ermitteln, ob mindestens ein Grundkörper, der im Endknoten enthalten ist, den Strahl kreuzt, umfasst; und
das Verfahren im dritten Zustand das Bestimmen des Farbwertes eines Pixels basierend auf der erhaltenen Kreuzungspunktinformation umfasst.

2. Verfahren nach Anspruch 1, wobei das Bestimmen des nächsten Zielknotens Folgendes umfasst:
wenn ein untergeordneter Knoten vorhanden ist, der den Strahl kreuzt, Bestimmen des einen untergeordneten Knotens als den nächsten Zielknoten (S625); und,
wenn zwei oder mehr untergeordnete Knoten vorhanden sind, die den Strahl kreuzen, Bestimmen eines untergeordneten Knotens, der den kürzesten Kreuzungspunktabstand zum Strahl unter den zwei oder mehr untergeordneten Knoten aufweist, als den nächsten Zielknoten (S630).

3. Verfahren nach Anspruch 1, wobei das Bestimmen des nächsten Zielknotens Folgendes umfasst:
wenn kein untergeordneter Knoten vorhanden ist, der den Strahl kreuzt, Entnehmen eines Knotens aus den Knoten, die dem Zielknoten aus der AS nicht untergeordnet sind; und
Bestimmen des entnommenen Knotens als den nächsten Zielknoten (S640).

4. Verfahren nach Anspruch 1, wobei das Ausführen der Operation, die dem Typ des bestimmten nächsten Zielknotens entspricht, ferner, wenn ermittelt wird, ob der mindestens eine Grundkörper den Strahl kreuzt, das Durchlaufen eines weiteren untergeordneten Knotens, der den Strahl kreuzt, umfasst.

5. Verfahren nach Anspruch 1, ferner umfassend, wenn der nächste Zielknoten ein Endknoten ist, das Ermitteln, ob ein ein voreingestellter Begrenzungsrahmen von mindestens einem Grundkörper, der im Endknoten enthalten ist, den Strahl kreuzt.

6. Verfahren nach Anspruch 1, wenn der Zielknoten, der in einem Wurzelknoten enthalten ist, ein Endknoten ist, ferner umfassend:
Teilen von mindestens einem Grundkörper, der im Zielknoten enthalten ist; und
Erzeugen eines untergeordneten Knotens des Zielknotens basierend auf dem geteilten mindestens einen Grundkörper.

7. Gerät, das dazu eingerichtet ist, eine Beschleunigungsstruktur (AS) für Strahlenverfolgung durchzulaufen,
wobei das Gerät Folgendes umfasst::
einen Informationsabrufer (310), der in einem ersten Zustand dazu eingerichtet ist, Information über eine Vielzahl von untergeordneten Knoten eines Zielknoten, der in der AS enthalten ist, zu erhalten, wobei die erhaltene Information in einer Datenstruktur voreingestellt ist und die Datenstruktur Speicheradressen umfasst, an denen die untergeordneten Knoten gespeichert sind, wobei Indexe die untergeordneten Knoten, Typinformation der untergeordneten Knoten und Begrenzungsrahmeninformation der untergeordneten Knoten angeben;
einen Kreuzungspunkttester (320), der im ersten Zustand dazu eingerichtet ist, zu ermitteln, gleichzeitig, ob jeder der Vielzahl von untergeordneten Knoten einen Strahl basierend auf der erhaltenen Information in einem Durchlaufprozess kreuzt; und
ein Steuergerät (330), das im ersten Zustand dazu eingerichtet ist, einen nächsten Zielknoten aus mindestens einem untergeordneten Knoten, der den Strahl kreuzt, zu bestimmen und eine Operation auszuführen, die einem Typ des bestimmten nächsten Zielknotens entspricht;
wobei das Steuergerät (330) im ersten Zustand dazu eingerichtet ist, die Operation, die dem Typ des bestimmten nächsten Zielknotens entspricht, durch Folgendes auszuführen:
wenn der nächste Zielknoten ein innerer Knoten ist, Bewegen zum mindestens einen untergeordneten Knoten des nächsten Zielknotens,
wenn der nächste Zielknoten ein Endknoten ist, Übertragen (716) von Information über den Endknoten an einen zweiten Zustand, und,
wenn kein Zielknoten vorhanden ist, Übertragen (718) des Ergebnisses des Durchlaufprozesses an einen dritten Zustand und Beenden des Durchlaufprozesses;
wobei das Steuergerät im zweiten Zustand dazu eingerichtet ist, mehrfach zu ermitteln, ob mindestens ein Grundkörper, der im Endknoten enthalten ist, den Strahl kreuzt; und
das Steuergerät im dritten Zustand dazu eingerichtet ist, den Farbwert eines Pixels basierend auf der erhaltenen Kreuzungspunktinformation zu ermitteln.

8. Gerät nach Anspruch 7, wobei das Steuergerät (330),
wenn ein untergeordneter Knoten vorhanden ist, der den Strahl kreuzt, dazu eingerichtet ist, den einen untergeordneten Knoten als den nächsten Zielknoten zu bestimmen, und,
wenn zwei oder mehr untergeordnete Knoten vorhanden sind, die den Strahl kreuzen, dazu eingerichtet ist, einen untergeordneten Knoten, der den kürzesten Kreuzungspunktabstand zum Strahl unter den zwei oder mehr untergeordneten Knoten aufweist, als den nächsten Zielknoten zu bestimmen.

9. Gerät nach Anspruch 7, wobei, wenn kein untergeordneter Knoten vorhanden ist, der den Strahl kreuzt, das Steuergerät (330) dazu eingerichtet ist, einen Konten aus Knoten, die dem Zielknoten aus der AS nicht untergeordnet sind, zu entnehmen und den entnommen Knoten als den nächsten Zielknoten zu bestimmen.

10. Gerät nach Anspruch 7, wobei, wenn ermittelt wird, ob der mindestens eine Grundkörper den Strahl kreuzt, das Steuergerät dazu eingerichtet ist, einen weiteren untergeordneten Knoten durchzulaufen, der den Strahl kreuzt.

11. Gerät nach Anspruch 10, wobei, wenn der nächste Zielknoten ein Endknoten ist, der Kreuzungspunkttester ferner dazu eingerichtet ist, zu ermitteln, ob ein voreingestellter Begrenzungsrahmen von mindestens einem Grundkörper, der im Endknoten enthalten ist, den Strahl kreuzt.

12. Gerät nach einem der Ansprüche 7 bis 11, wobei, wenn der Zielknoten, der in einem Wurzelknoten enthalten ist, ein Endknoten ist, das Steuergerät dazu eingerichtet ist, mindestens einen Grundkörper, der im Zielknoten enthalten ist, zu teilen und einen untergeordneten Knoten des Zielknotens basierend auf dem geteilten mindestens einen Grundkörper zu erzeugen.

13. Nicht-transitorisches computerlesbares Aufzeichnungsmedium, das darauf integriert ein Programm zum Ausführen des Verfahrens nach Anspruch 1, wenn das Programm auf einem Computer ausgeführt wird, aufweist.

## Revendications

1. Méthode de traversée d'une structure d'accélération (AS) pour le suivi de rayons par un appareil ;
la méthode comprenant :
dans un premier état :
obtenir des informations sur une pluralité de noeuds enfants d'un noeud cible inclus dans l'AS (S510), les informations obtenues étant prédéterminées dans une structure de données, et la structure de données comprenant des adresses en mémoire auxquelles sont stockés les noeuds enfant, des indices indiquant les noeuds enfants, des informations de type des noeuds enfants, et des informations sur le cadre d'objet des noeuds enfants ;
déterminer simultanément si chacun de la pluralité de noeuds enfants croise un rayon basé sur les informations obtenues (S520) dans un processus de traversée ;
déterminer un noeud cible suivant parmi au moins un noeud enfant croisant le rayon (S530);
effectuer une opération correspondant à un type du noeud cible suivant déterminé (S540) ;
l'exécution de l'opération correspondant au type du noeud cible suivant déterminé comprenant :
si le noeud cible suivant est un noeud interne, le passage à au moins un noeud enfant du noeud cible suivant,
si le noeud cible suivant est un noeud feuille, la transmission (716) d'informations sur le noeud feuille à un deuxième état, et
s'il n'existe pas de noeud cible, la transmission (718) du résultat du processus de traversée vers un troisième état, et la cessation du processus de traversée ;
la méthode comprenant, dans le deuxième état, la détermination répétée si au moins une fonction primitive comprise dans le noeud feuille croise le rayon ; et
la méthode comprenant, dans le troisième état, la détermination de la valeur chromatique d'un pixel sur la base des informations d'intersection obtenues.

2. Méthode selon la revendication 1, la détermination du noeud cible suivant comprenant :
s'il existe un noeud enfant croisant le rayon, la détermination du noeud enfant comme étant le noeud cible suivant (S625) ; et
s'il existe deux ou plusieurs noeuds enfants croisant le rayon, la détermination d'un noeud enfant, dont la distance d'intersection du rayon parmi les deux ou plusieurs noeuds enfants est la plus courte, comme étant le noeud cible suivant (S630).

3. Méthode selon la revendication 1, la détermination du noeud cible suivant comprenant :
s'il n'existe aucun noeud enfant croisant le rayon, l'extraction d'un noeud quelconque, parmi des noeuds qui ne sont pas subordonnés au noeud cible, de l'AS ; et
la détermination du noeud extrait comme étant le noeud cible suivant (S640).

4. Méthode selon la revendication 1, l'exécution de l'opération correspondant au type de noeud cible suivant déterminé comprenant en outre, si l'on a déterminé si au moins une fonction primitive croise le rayon, la traversée d'un autre noeud enfant croisant le rayon.

5. Méthode selon la revendication 1, comprenant en outre, si le noeud cible suivant est un noeud feuille, la détermination si un cadre d'objet préétabli d'au moins une fonction primitive comprise dans le noeud feuille croise le rayon.

6. Méthode selon la revendication 1, comprenant en outre, si le noeud cible inclus dans un noeud racine est un noeud feuille :
la division d'au moins une fonction primitive incluse dans le noeud cible ; et
la génération d'un noeud enfant du noeud cible basée sur l'au moins une fonction primitive divisée.

7. Appareil adapté pour la traversée d'une structure d'accélération (AS) pour le suivi de rayon, l'appareil comprenant :
un dispositif d'obtention d'informations (310) adapté, dans un premier état, pour obtenir des informations sur une pluralité de noeuds enfants d'un noeud cible inclus dans l'AS, les informations obtenues étant préétablies dans une structure de données, et la structure de données comprenant des adresses en mémoire auxquelles sont stockés les noeuds enfants, des indices indiquant les noeuds enfants, des informations de type des noeuds enfants, et des informations sur le cadre d'objet des noeuds enfants ;
un testeur d'intersection (320) adapté, dans le premier état, pour déterminer simultanément si chacun de la pluralité de noeuds enfants croise un rayon basé sur les informations obtenues dans un processus de traversée ; et
un contrôleur (330) adapté, dans le premier état, pour déterminer un noeud cible suivant parmi au moins un noeud enfant croisant le rayon, et exécuter une opération correspondant à un type du noeud cible suivant déterminé ;
le contrôleur (330) étant adapté, dans le premier état, pour effectuer l'opération correspondant au type du noeud cible suivant déterminé en procédant :
si le noeud cible suivant est un noeud interne, au déplacement à au moins un noeud enfant du noeud cible suivant,
si le noeud cible suivant est un noeud feuille, à la transmission (716) d'informations sur le noeud feuille à un deuxième état, et
s'il n'existe aucun noeud cible, à la transmission (718) du résultat du processus de traversée vers un troisième état, et à la cessation du processus de traversée ;
le contrôleur étant adapté, dans le deuxième état, pour déterminer de façon répétée si au moins une fonction primitive, inclue dans le noeud feuille, croise le rayon ; et
le contrôleur étant adapté, dans le troisième état, pour déterminer la valeur chromatique d'un pixel sur la base des informations d'intersection obtenues.

8. Appareil selon la revendication 7, le contrôleur (330) étant adapté, lorsqu'il existe un noeud enfant croisant le rayon, pour déterminer le noeud enfant comme étant le noeud cible suivant, et s'il existe deux ou plusieurs noeuds enfants croisant le rayon, pour déterminer un noeud enfant, dont la distance d'intersection du rayon parmi les deux ou plusieurs noeuds enfants est la plus courte, comme étant le noeud cible suivant.

9. Appareil selon la revendication 7, le contrôleur (330) étant adapté, s'il n'existe aucun noeud enfant croisant le rayon, pour extraire un noeud quelconque, parmi des noeuds qui ne sont pas subordonnés au noeud cible, de l'AS, et déterminer le noeud extrait comme étant le noeud cible suivant.

10. Appareil selon la revendication 7, dans lequel, lorsque l'on détermine si au moins une fonction primitive croise le rayon, le contrôleur est adapté pour traverser un autre noeud enfant croisant le rayon.

11. Appareil selon la revendication 10, dans lequel, lorsque le noeud cible suivant est un noeud feuille, le testeur d'intersection est adapté en outre pour déterminer si un cadre objet préétabli d'au moins une fonction primitive, inclus dans le noeud feuille, croise le rayon.

12. Appareil selon une quelconque des revendications 7 à 11, le noeud cible inclus dans un noeud racine étant un noeud feuille, le contrôleur étant adapté pour diviser au moins une fonction primitive incluse dans le noeud cible, et pour générer un noeud enfant du noeud cible sur la base d'au moins une fonction primitive divisée.

13. Support d'enregistrement non transitoire lisible par ordinateur, dans lequel est intégré un programme pour l'exécution de la méthode selon la revendication 1, lors de l'exécution dudit programme sur un ordinateur.
